# EUROPÄISCHE PATENTANMELDUNG

(11) **EP 1 571 296 A1**
(43) Veröffentlichungstag der Anmeldung: **07.09.2005**
(21) Anmeldenummer: 04100818.6
(22) Anmeldetag: 01.03.2004
(51) Int. Cl.: F01D 5/18, F01D 9/04

(54) **Gekühlte Strömungsmaschinenschaufel und Verfahren zur Kühlung**

(71) Anmelder: Alstom Technology Ltd, 5400 Baden (CH)
(72) Erfinder: Fokine, Arkadi, 109444, Moskau (RU); Trifonov, Serguej, 109390, Moskau (RU); Trishkin, Alexandre, 140080, Lytkarino (RU); Vassiliev, Vladimir, 5300, Turgi (CH); Vinogradov, Dimitri, 1154047, Moskau (RU)

(57) **Zusammenfassung**

Es wird eine Strömungsmaschinenschaufel (110), insbesondere eine Turbinenschaufel einer Gasturbine vorgestellt. Die Strömungsmaschinenschaufel (110) umfasst einen Schaufelfuß (111) mit einer Kühlmittelzuführung (112), einen Schaufelkopf (113), der mit einem Deckbandelement (114) ausgebildet ist, sowie ein Schaufelblatt (115). Innerhalb des Schaufelblatts (115) sind ein erster Durchströmkanal (119a) und ein zweiter Durchströmkanal (119b) angeordnet, die sich jeweils in Schaufellängsrichtung erstrecken. Längs eines Abschnitts des Deckbandelements (114) ist in dem Deckbandelement ein Deckbandkühlkanal (120) ausgebildet, der eine Einlassöffnung (121) und eine Auslassöffnung (122) umfasst, wobei die Einlassöffnung (121) des Deckbandkühlkanals in den ersten Durchströmkanal (119a) und die Auslassöffnung (122) des Deckbandkühlkanals in den zweiten Durchströmkanal (119b) mündet. Der zweite Durchströmkanal (119b) ist hierbei näher zu der Schaufelblatt-Vorderkante (116) angeordnet als der erste Durchströmkanal (119a).
Kühlfluid strömt somit zuerst durch den ersten Durchströmkanal (119a) in den Deckbandkühlkanal (120) und gelangt von hier in den zweiten, der Schaufelblatt-Vorderkante nahen Durchströmkanal (119b).

## Beschreibung

### Technisches Gebiet

Die Erfindung betrifft eine Strömungsmaschinenschaufel gemäß dem Oberbegriff des Anspruchs 1. Ferner betrifft die Erfindung ein Verfahren gemäß dem Oberbegriff des unabhängigen Verfahrensanspruchs.

### Stand der Technik

Aufgrund der in modernen Gasturbinen oder Gasturbogruppen heutzutage üblichen hohen Turbineneintrittstemperaturen müssen oftmals die Schaufeln der ersten Turbinenschaufelreihen hinter der Brennkammer gekühlt werden.

Zur Kühlung der Schaufeln wird ein Kühlmittel, häufig Luft, die dem Verdichter entnommen wird, der zu kühlenden Schaufel zugeführt und hier durch in dem Schaufelblatt verlaufende Strömungskanäle geleitet. Die Schaufel wird dabei durch konvektiven Wärmeübergang von den Kanalwänden auf das Kühlfluid gekühlt. Das erwärmte Kühlfluid wird dann zumeist über Bohrungen im Bereich der Hinterkante der Schaufel in die Hauptströmung abgegeben. Eine in dieser Weise fluidisch gekühlte Turbinenschaufel ist beispielsweise aus der US-Patentschrift US 4 820 123 oder auch aus der europäischen Patentanmeldeschrift EP 0 649 975 A1 bekannt.

Aufgrund der zunehmend steigenden Turbineneintrittstemperaturen heutiger Gasturbinen ist es oftmals auch erforderlich, alle dem Heißgasstrom ausgesetzten Bauteile zu kühlen. Somit ist nicht nur das Schaufelblatt, sondern auch der Schaufelfuß zu kühlen. Ferner sind insbesondere Schaufeln von Statoren häufig zusätzlich mit Deckbandelementen ausgestattet, die dann auch zu kühlen sind. Eine übliche Methode zur Kühlung von Deckbandelementen ist, ein Teil des Kühlfluids, das zur Kühlung des Schaufelblattes durch das Schaufelblatt strömt, auch durch eine in dem Deckbandelement angebrachte Kühlmittelbohrung zu führen und anschließend nach außen in die Umgebung der Schaufel abzugeben. Von hier gelangt das freigesetzte Kühlfluid über Bauteilspalte in die Hauptströmung der Turbine. Durch das Einströmen des Kühlfluids über Bauteilspalte werden jedoch einerseits Strömungsverluste der Hauptströmung verursacht. Ferner ist das abgegebene Kühlfluid oftmals für Kühlzwecke thermisch noch nicht verbraucht, so dass hierdurch auch ein thermodynamischer Verlust entsteht. Um eine geforderte Kühlleistung zu erreichen, ist ein größerer Kühlfluidmassenstrom erforderlich, als dieser bei optimaler Ausnutzung des Kühlfluids erforderlich wäre. Beide Faktoren führen letztlich zu einer Verschlechterung des Wirkungsgrades der Gasturbine oder der Gasturbogruppe.

Häufig stellt sich aber auch das Problem, dass sich das Kühlfluid auf seinem Weg bis zu dem Deckbandelement bereits so stark erhitzt hat, dass keine ausreichende Kühlung des Deckbandelements mehr gewährleistet ist. Dies tritt insbesondere dann auf, wenn die Hauptströmung sehr heiss ist, so dass ein hoher Wärmeeintrag von der Hauptströmung in das Schaufelblatt der Schaufel zu verzeichnen ist. Infolgedessen wird das Kühlfluid bereits im Bereich des Schaufelblatts sehr stark erhitzt. Durch die hohe Temperatur des Kühlfluids ist dann keine ausreichende Kühlung des Deckbandelements mehr gewährleistet, wodurch es infolge lokaler Bauteilübertemperaturen zu einer Schädigung des Bauteils bis hin zu einem sofortigen Bauteilausfall kommen kann. Aber auch ohne unmittelbare Bauteilschädigung führt eine nicht ausreichende Kühlung zu einer Verkürzung der Lebensdauer der Schaufeln.

### Darstellung der Erfindung

Hier will die Erfindung Abhilfe schaffen. Der Erfindung liegt somit die Aufgabe zugrunde, eine Strömungsmaschinenschaufel und ein Verfahren der eingangs genannten Art anzugeben, mit welchen die Nachteile des Standes der Technik vermieden werden.

Die Erfindung trägt dazu bei, eine mit einem Deckbandelement ausgeführte Strömungsmaschinenschaufel effektiver zu kühlen und die Kühleffektivität eines zur Kühlung verwendeten Kühlfluidmassenstroms zu steigern. Weiterhin trägt die Erfindung dazu bei, die zu kühlenden Bereiche einer Strömungsmaschinenschaufel bedarfsangepasst zu kühlen und gleichzeitig eine hinreichende Kühlung des Deckbandelements sicherzustellen. Gemäß einem Aspekt werden ferner die im Zusammenhang mit der Kühlung eines Deckbandelements einer Strömungsmaschinenschaufel entstehenden strömungsmechanischen und/oder thermodynamischen Verluste minimiert.

Diese Aufgabe wird erfindungsgemäß durch die Strömungsmaschinenschaufel gemäss Anspruch 1 sowie durch das Verfahren gemäß dem unabhängigen Verfahrensanspruch gelöst. Weitere vorteilhafte Ausgestaltungen der Erfindung finden sich in den Unteransprüchen.

Die erfindungsgemäß ausgebildete Strömungsmaschinenschaufel umfasst einen Schaufelfuß mit einer Kühlmittelzuführung, einen Schaufelkopf, der mit einem Deckbandelement ausgebildet ist, sowie ein Schaufelblatt, welches sich zwischen dem Schaufelfuß und dem Schaufelkopf in einer Schaufellängsrichtung erstreckt und eine Schaufelblatt-Vorderkante sowie eine Schaufelblatt-Hinterkante aufweist. Innerhalb des Schaufelblattes sind ein erster Durchströmkanal und ein zweiter Durchströmkanal angeordnet, die sich jeweils in Schaufellängsrichtung erstrecken. Weiterhin erstreckt sich wenigstens längs eines Abschnitts des Deckbandelements in dem Deckbandelement ein Deckbandkühlkanal, der mit wenigstens einer Einlassöffnung und wenigstens einer Auslassöffnung ausgebildet ist. Der erste Durchströmkanal ist an seinem schaufelfußseitigen Ende mit der Kühlmittelzuführung und an seinem schaufelkopfseitigen Ende über die Einlassöffnung mit dem Deckbandkühlkanal verbunden, während der zweite Durchströmkanal an seinem schaufelkopfseitigen Ende über die Auslassöffnung mit dem Deckbandkühlkanal verbunden ist. Der zweite Durchströmkanal ist näher zu der Schaufelblatt-Vorderkante angeordnet als der erste Durchströmkanal.

Gemäß der in dieser Weise ausgeführten Strömungsmaschinenschaufel wird ein Kühlfluidmassenstrom über den ersten Durchströmkanal dem Deckbandkühlkanal zugeführt, durchströmt den Deckbandkühlkanal und gelangt erst von hier in den zweiten Durchströmkanal.

Es zeigte sich, dass dadurch, dass der erste Durchströmkanal der erfindungsgemäß ausgeführten Schaufel weiter von der Schaufelblatt-Vorderkante entfernt angeordnet ist als der zweite Durchströmkanal, sichergestellt werden kann, dass der Kühlfluidmassenstrom bei Erreichen des Deckbandkühlkanals noch nicht verbraucht ist. Dies resultiert daher, dass der höchste Wärmeeintrag von der heißen Hauptströmung in die Schaufel im Bereich der Schaufelblatt-Vorderkante erfolgt. Ein Großteil dieser in das Schaufelblatt eingeleiteten Wärme wird in das Kühlfluid, das in dem zweiten, näher zu der Schaufelblatt-Vorderkante angeordneten Durchströmkanal strömt, eingeleitet. Der zweite Durchströmkanal schirmt somit den ersten Durchströmkanal wärmetechnisch ab. Das in dem ersten Durchströmkanal geführte Kühlfluid erfährt somit einen nur geringen Wärmeeintrag. Dementsprechend ist in allen Betriebsfällen der Strömungsmaschine auch bei sehr heißer Hauptströmung eine ausreichende Kühlung des Deckbandelements sichergestellt. Die Gefahr einer Überhitzung des Deckbandelements kann demgemäss ausgeschlossen werden oder ist zumindest erheblich vermindert.

In einer bevorzugten Ausführung der Erfindung ist der Deckbandkühlkanal gegenüber der Umgebung abgedichtet, d.h. außer der wenigstens einen Einlassöffnung sowie der wenigstens einen Auslassöffnung, die mit dem ersten und zweiten Durchströmkanal verbunden sind, sind in dem Deckbandelement keine weiteren Öffnungen zur Verbindung des Deckbandkühlkanals mit der Umgebung der Strömungsmaschinenschaufel vorgesehen. Der gesamte Kühlfluidmassenstrom, der zur Kühlung des Deckbandelements dem Deckbandkühlkanal über den ersten Durchströmkanal zugeführt wird, durchströmt somit nach Austritt aus dem Deckbandkühlkanal auch den zweiten Durchströmkanal.
Der gesamte zugeführte Kühlfluidmassenstrom demgemäss nicht nur zur Kühlung des ersten Durchströmkanals sowie des Deckbandkühlkanals sondern auch zur Kühlung des zweiten Durchströmkanals, wobei die weitaus größte Wärmemenge dem Kühlfluid erst in dem zweiten Durchströmkanal zugeführt wird.
Dadurch dass das Kühlfluid erst durch den ersten, ferner zur Schaufelvorderkante angeordneten Durchströmkanal, dann in den Deckbandkühlkanal und von hier in den zweiten, näher zur Schaufelvorderkante angeordneten Durchströmkanal geführt wird, wird überdies die Kühleffektivität des Kühlfluids erhöht. Für eine bestimmte geforderte Kühlleistung ist somit ein geringerer Kühlfluidmassenstrom erforderlich, was letztlich einen höheren Wirkungsgrad der Strömungsmaschine bedeutet.

Auch wurde erkannt, dass durch Einbringen von Kühlfluid in die Hauptströmung im Bereich des Deckbandelements besonders hohe Mischungs- und Strömungsverluste in der Hauptströmung verursacht werden. Dies ist darin begründet, dass die wandnahe Hauptströmung im Bereich des Deckbandelements aufgrund der wandnahen Grenzschicht sowie der Ausbildung mehrerer Wirbelstrukturen, beispielsweise des Sekundärströmungswirbels, des Eckenwirbels und/oder des Hufeisenwirbels, energetisch defizitär ist. Zusätzlich verursachen die hohen thermischen Unterschiede zwischen der Hauptströmung und dem noch nicht verbrauchten, zur Kühlung des Deckbandelements verwendeten Kühlfluid hohe thermisch bedingte Strömungsverluste.

Hier setzt die Erfindung dadurch an, dass das Kühlfluid nach dem Durchströmen des Deckbandkühlkanals nicht als Leckage in die Hauptströmung abgegeben wird, sondern dem zweiten Durchströmkanal zugeführt und von hier über die wenigstens eine Kühlmittelabführung gezielt abgeführt wird.

Auch wenn grundsätzlich der erste Durchströmkanal über eine weitere Verbindung direkt mit dem zweiten Durchströmkanal verbunden sein kann, sieht eine besonders zweckmäßige Ausführung der Erfindung vor, dass der erste Durchströmkanal ausschließlich über den Deckbandkühlkanal mit dem zweiten Durchströmkanal verbunden ist. So ist gewährleistet, dass der gesamte Kühlfluidmassenstrom, der durch den ersten Durchströmkanal zugeführt wird, auch durch den Deckbandkühlkanal strömt.

Gemäß einer bevorzugten Ausgestaltung der Erfindung ist der zweite Durchströmkanal in einem an die Schaufelblatt-Vorderkante angrenzenden Bereich der Strömungsmaschinenschaufel angeordnet und der erste Durchströmkanal in einem an die Schaufelblatt-Hinterkante angrenzenden Bereich der Strömungsmaschinenschaufel angeordnet. Es zeigte sich, dass das in dem ersten Durchströmkanal längs der Schaufelblatt-Hinterkante geführte Kühlfluid eine nur geringe Temperaturerhöhung erfährt. Es gelangt somit nahezu unverbraucht in den Deckbandkühlkanal. Erst in dem zweiten Durchströmkanal, der angrenzend zu der Schaufelblatt-Vorderkante verläuft, erfährt das Kühlfluid einen hohen Wärmeeintrag.

Gemäß einer weiteren bevorzugten Ausgestaltung der Erfindung ist der erste Durchströmkanal zumindest teilweise von dem zweiten Durchströmkanal umschlossen. Zweckmäßig kann der erste Durchströmkanal auch vollständig von dem zweiten Durchströmkanal umschlossen sein. Ein teilweises oder vollständiges Umschließen des ersten Durchströmkanals durch den zweiten Durchströmkanal sorgt für eine weitgehend optimale Isolierung des eingeschlossenen Durchströmkanals gegenüber einem Wärmeeintrag von der Hauptströmung.

In einer vorteilhaften Weiterbildung der erfindungsgemäßen Strömungsmaschinenschaufel umschließt das Schaufelblatt einen Hohlraum, der sich in Schaufellängsrichtung über wenigstens einen Teil des Schaufelblatts, vorzugsweise über das gesamte Schaufelblatt erstreckt. In dem Hohlraum ist eine Trennwandung angeordnet, die den Hohlraum in einen der Schaufelblatt-Vorderkante zugewandten Bereich sowie einen der Schaufelblatt-Vorderkante abgewandten Bereich unterteilt, wobei der der Schaufelblatt-Vorderkante zugewandte Bereich den zweiten Durchströmkanal bildet und der der Schaufelblatt-Vorderkante abgewandte Bereich den ersten Durchströmkanal bildet.

Zweckmäßig ist eine Innenkontur des Hohlraums im wesentlichen geometrisch ähnlich der Außenkontur des Schaufelblatts der Strömungsmaschinenschaufel ausgebildet.

Die Trennwandung kann vorteilhaft als ein Lenkblech ausgeführt sein, das in den Hohlraum eingesetzt ist. Zweckmäßig ist das Lenkblech hierzu quer zur Schaufellängsrichtung gebogen, so dass es sich über die Biege-Rückstellkraft eigenständig an die Innenseite des Hohlraums anlegt.

In einer zweckmäßigen Ausgestaltung der Erfindung sind in dem Schaufelblatt eine oder mehrere Austrittsöffnungen angeordnet, die jeweils auf die Außenseite des Schaufelblattes führen. Die Austrittsöffnungen münden entweder unmittelbar in den zweiten Durchströmkanal oder sind über einen oder mehrere Verbindungskanäle mit dem zweiten Durchströmkanal fluidisch verbunden. Nach dem Durchströmen des zweiten Durchströmkanals gelangt das Kühlfluid somit über die Austrittsöffnungen auf die Außenseite der Schaufel. Die Austrittsöffnungen können hierzu im Bereich der Vorderkante und/oder im Bereich der Hinterkante und/oder im Bereich zwischen der Vorderkante und der Hinterkante des Schaufelblattes sowohl auf der Saugseite als auch auf der Druckseite des Schaufelblattes angeordnet sein.

In einer weiteren zweckmäßigen Ausgestaltung der Erfindung ist der zweite Durchströmkanal an seinem schaufelfußseitigen Ende mit einer Kühlmittelabführung verbunden. Nach dem Durchströmen des zweiten Durchströmkanals wird das für Kühlzwecke weitgehend verbrauchte Kühlfluid somit gezielt über die Kühlmittelabführung abgeführt.

Gemäss einer bevorzugten Ausführungsform der Erfindung umfasst die Kühlmittelabführung wenigstens eine Austrittsöffnung, die im Bereich der Schaufelblatt-Hinterkante angeordnet ist. Es kann aber durchaus auch zweckmäßig sein, zur Kühlmittelabführung im Bereich der Schaufelblatt-Hinterkante eine Vielzahl von Austrittsöffnungen gleichmäßig verteilt über die Schaufelblattlänge anzuordnen. Das verbrauchte Kühlfluid strömt somit über die wenigstens eine Austrittsöffnung oder über die Vielzahl der Austrittsöffnungen in die Hauptströmung ab. Durch eine dem Fachmann bekannte Ausgestaltung der Austrittsöffnungen erfolgt die Abströmung hierbei vorteilhaft so, dass das abströmende Kühlfluid über der Schaufelblatt-Hinterkante stromab der Austrittsöffnungen einen Kühlfilm ausbildet. Hierdurch wird einerseits die Schaufelblatt-Hinterkante besonders effektiv gekühlt. Andererseits lassen sich so die durch die Zumischung des Kühlfluids erzeugten Mischungsverluste der Hauptströmung vermindern.

In einer weiteren zweckmäßigen Ausgestaltung der Erfindung ist zwischen dem zweiten Durchströmkanal und der Kühlmittelabführung wenigstens ein weiterer Durchströmkanal so angeordnet, dass der zweite Durchströmkanal zusammen mit dem wenigstens einen weiteren Durchströmkanal einen serpentinenartigen oder auch einen andersartigen Kanalverlauf in dem Schaufelblatt ausbildet. Der zweite Durchströmkanal sowie der wenigstens eine weitere Durchströmkanal müssen sich in Längsrichtung nicht jeweils über die vollständige Schaufelblatthöhe erstrecken, sondern können auch nur über einen Teil der Schaufelblatthöhe ausgebildet sein. Auch können die Durchströmkanäle unterschiedliche und längs ihres jeweiligen Verlaufs variierende Querschnitte aufweisen, um so die Strömungsgeschwindigkeit des Kühlfluids innerhalb der Durchströmkanäle zu variieren. Auch können in den Kanälen zur Intensivierung des Wärmeaustauschs Wärmeaustauschrippen vorgesehen sein.

Vorzugsweise ist die erfindungsgemäße Strömungsmaschinenschaufel als Turbinenschaufel einer Gasturbine oder Gasturbogruppe ausgebildet.

In einer zweckmäßigen Weiterbildung der Erfindung ist die Strömungsmaschinenschaufel als Schaufel eines Stators, insbesondere eines ersten oder zweiten, hinter einer Brennkammer angeordneten Stators, ausgeführt.

Gemäss einer vorteilhaften Ausgestaltung der Erfindung verläuft der Deckbandkühlkanal in dem Deckbandelement im wesentlichen parallel zu einer Innenfläche des Deckbandelements mit einer Erstreckung von etwa der Schaufelblatt-Vorderkante bis zu etwa der Schaufelblatt-Hinterkante. Sind die Strömungsmaschinenschaufeln in einer Strömungsmaschine angeordnet, so bilden die Innenflächen der am Umfang aneinandergereihten Deckbandelemente eine die Hauptströmung begrenzende Kanalwand, beispielsweise die gehäuseseitige oder die nabenseitige Kanalwand. Der Deckbandkühlkanal erstreckt sich somit zweckmäßig wenigstens über den sich durch lotrechte Projektion des Schaufelblattes auf das Deckbandelement ergebenden Bereich. In diesem Bereich wird durch das Schaufelblatt vermehrt Wärme in das Deckbandelement eingeleitet.

Der Deckbandkühlkanal ist zweckmäßig schlitzförmig ausgebildet. Ferner ist der Deckbandkühlkanal in dem Deckbandelement in einer Umfangsrichtung vorzugsweise beidseitig offen, wobei sich die Umfangsrichtung auf die Anordnung der Strömungsmaschinenschaufel in einer Strömungsmaschine bezieht. Durch Aneinanderreihung einer Vielzahl erfindungsgemäß ausgebildeter Strömungsmaschinenschaufeln am Umfang der Strömungsmaschine ergibt sich somit ein am Umfang durchgängiges Deckband mit einem am Umfang durchgängigen Deckbandkühlkanal. Hierdurch ist eine am Umfang durchgängige und gleichmäßige Kühlung des gesamten Deckbands sichergestellt.

In einer zweckmäßigen Ausgestaltung der Erfindung umfasst der Schaufelkopf eine erste Decklage, die das Schaufelblatt abdeckt. Wenigstens im Bereich der Schaufelblatt-Vorderkante sowie im Bereich der Schaufelblatt-Hinterkante ist jeweils ein Abschlusssteg angeordnet, der sich jeweils lotrecht oder näherungsweise lotrecht zur ersten Decklage von dieser aus erstreckt. Zwischen den Abschlussstegen und mittels dieser gehaltert ist in einem Abstand zu der ersten Decklage eine weitere Decklage so angeordnet, dass ein Zwischenraum zwischen der ersten Decklage und der weiteren Decklage den Deckbandkühlkanal ausbildet. Die Einlassöffnung und die Auslassöffnung sind in der ersten Decklage angeordnet. Der Schaufelfuß, das innen hohl ausgeführte Schaufelblatt, die erste Decklage sowie die Abschlussstege sind bevorzugt als einteiliges Gussstück hergestellt. Zur Halterung der weiteren, zweiten Decklage kann dann beispielsweise in jedem der Abschlussstege eine Nut vorgesehen sein, in denen die weitere, zweite Decklage fixiert wird.

Die erfindungsgemäß ausgeführte Strömungsmaschinenschaufel eignet sich insbesondere zur Verwendung in einem Turbinenstator, wobei hier in bekannter Weise eine Vielzahl von Strömungsmaschinenschaufeln am Umfang nebeneinander angeordnet sind. Besonders vorteilhaft sind alle Strömungsmaschinenschaufeln des Turbinenstators erfindungsgemäß ausgeführt.

Der Turbinenstator wiederum kann Teil einer Gasturbogruppe oder einer Gasturbine sein.

Die erfindungsgemäß ausgeführte Strömungsmaschinenschaufel kann grundsätzlich aber auch in einem Rotor einer Gasturbine oder Gasturbogruppe Verwendung finden.

In einem weiteren Aspekt stellt die Erfindung ein Verfahren zur Kühlung einer Strömungsmaschinenschaufel mitsamt Deckbandelement, insbesondere zur Kühlung einer Turbinenschaufel einer Gasturbine oder Gasturbogruppe, zur Verfügung. Das erfindungsgemäße Verfahren umfasst, einen Kühlmittelmassenstrom in einem Bereich, der zur Schaufelblatt-Vorderkante entfernt ist, über das Schaufelblatt der Schaufel dem Deckbandelement zuzuführen. Danach wird der Kühlmittelmassenstrom längs des zu kühlenden Deckbandelements geführt und anschließend in einem der Schaufelblatt-Vorderkante nahen Bereich über das Schaufelblatt der Schaufel geführt.

In einer vorteilhaften Weiterbildung des erfindungsgemäßen Verfahrens wird der Kühlmittelmassenstrom nach dem Führen längs des Deckbandelements zur Kühlung der Strömungsmaschinenschaufel entlang eines serpentinenartigen Durchströmwegs durch das Schaufelblatt geleitet.

Eine weitere vorteilhafte Weiterbildung des erfindungsgemäßen Verfahrens sieht vor, wenigstens einen Teil des Kühlmittelmassenstroms nach dem Führen längs des Deckbandelements unmittelbar entlang der Schaufelblatt-Vorderkante zu führen.

Gemäß einer weiteren vorteilhaften Weiterbildung des erfindungsgemäßen Verfahrens umfasst das Schaufelblatt einen Hohlraum, der sich in Schaufellängsrichtung über wenigstens einen Teil des Schaufelblatts, vorzugsweise über das gesamte Schaufelblatt erstreckt. Der Hohlraum ist in wenigstens zwei Bereich unterteilt, wobei ein erster Bereich angrenzend an die Schaufelblatt-Vorderkante angeordnet ist und ein zweiter Bereich nahe der Schaufelblatt-Hinterkante angeordnet ist. Gemäß der vorteilhaften Weiterbildung des Verfahrens wird der Kühlmittelmassenstrom über den zweiten Bereich dem Deckbandelement zugeführt und über den ersten Bereich abgeführt.

In einer weiteren vorteilhaften Weiterbildung des erfindungsgemäßen Verfahrens wird der Kühlmittelmassenstrom über eine über die Schaufelhöhe verteilte Abströmung an einer Schaufelhinterkante in eine Hauptströmung abgeführt.

Das erfindungsgemäße Verfahren eignet sich insbesondere zur Kühlung einer Strömungsmaschinenschaufel, insbesondere einer Statorschaufel einer Gasturbogruppe.

In einem weiteren Aspekt stellt die Erfindung ein Herstellungsverfahren zur Herstellung einer oben beschriebenen Strömungsmaschinenschaufel zur Verfügung. Gemäß dem Herstellungsverfahren wird der Schaufelfuß, das innen hohl ausgeführte Schaufelblatt, die erste Decklage des Schaufelkopfes und die Abschlussstege als einteiliges Gussstück hergestellt, die Trennwandung in den Hohlraum des Gussstücks eingesetzt, und die zweite Decklage zwischen den Abschlussstegen eingesetzt.

### Kurze Beschreibung der Zeichnungen

Die Erfindung wird nachfolgend anhand eines in den Figuren illustrierten Ausführungsbeispiels näher erläutert. Es zeigen:
Figur 1 eine stark vereinfachte Darstellung einer Gasturbogruppe;
Figur 2 einen Längsschnitt durch eine erfindungsgemäß ausgeführte Strömungsmaschinenschaufel;
Figur 3 einen Querschnitt durch das Schaufelblatt der Strömungsmaschinenschaufel aus Figur 2.

In den Figuren sind nur die für das Verständnis der Erfindung wesentlichen Elemente und Bauteile dargestellt.
Die dargestellten Ausführungsbeispiele sind rein instruktiv zu verstehen und sollen einem besseren Verständnis dienen, jedoch nicht als Einschränkung des Erfindungsgegenstandes verstanden werden.

### Wege zur Ausführung der Erfindung

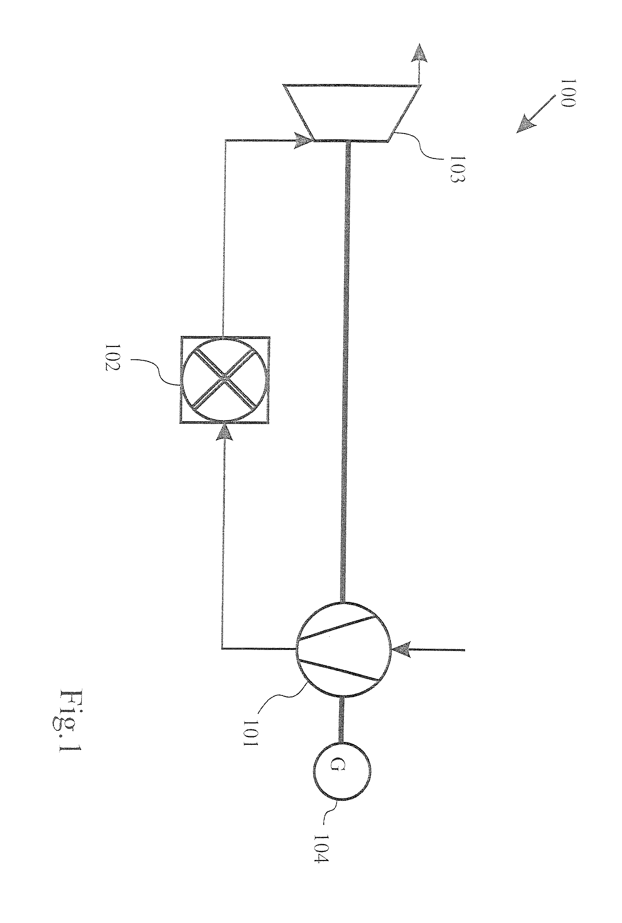

In Figur 1 ist in einer stark schematisierten Darstellung eine Gasturbogruppe 100 dargestellt, wie sie dem Fachmann geläufig ist und häufig beispielsweise zur Stromerzeugung oder für stationäre oder mobile Antriebe, wie beispielsweise Flugzeugantriebe, Verwendung findet. Die beispielhaft dargestellte Gasturbogruppe umfasst als wesentliche Baugruppen einen Verdichter 101, eine Brennkammer 102 sowie eine Turbine 103. In dem Verdichter 102 wird eintretende Umgebungsluft verdichtet und der Brennkammer 102 zugeführt. In der Brennkammer 102 wird der verdichteten Luft Brennstoff beigemischt und das Gemisch verbrannt. In der Turbine 103 wird das in der Brennkammer 102 erzeugte Heissgas arbeitsleistend entspannt, wobei die Turbine 103 der hier dargestellten stationären Anlage neben dem Verdichter 101 einen Leistungsverbraucher 104, beispielsweise einen Generator zur Stromerzeugung, antreibt. Selbstverständlich ist es auch möglich, die Gasturbogruppe mehrwellig, mit mehreren Turbinen und zwischengeordneten Brennkammern, mit mehreren Verdichtern und zwischengeordneten Kühlern, und dergleichen auszuführen. Diese Ausführungsformen sind dem Fachmann geläufig und stellen die Erfindung lediglich in einen anwendungsrelevanten Kontext, weshalb sie an dieser Stelle nicht weiter beschrieben werden.

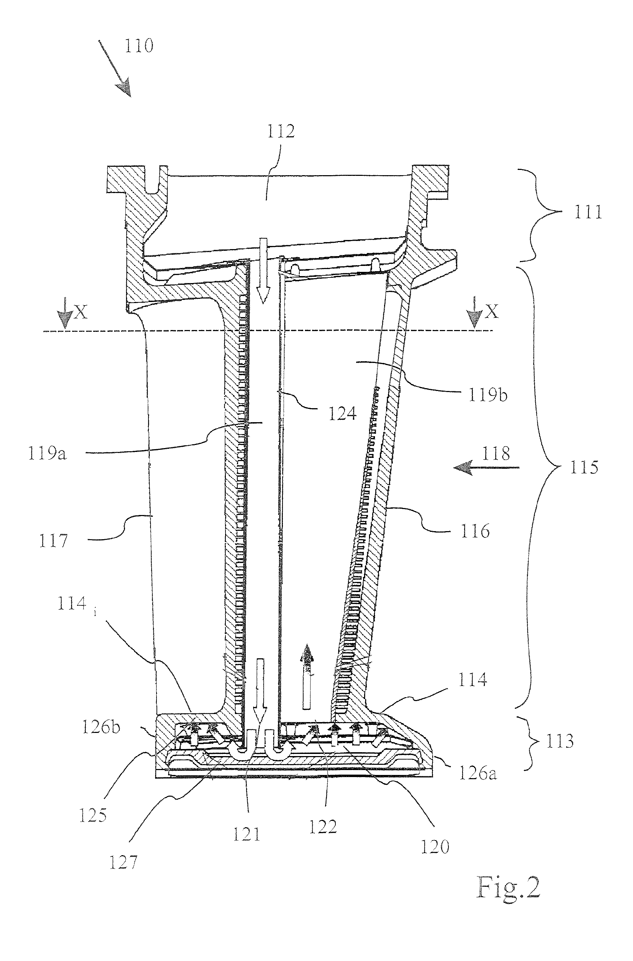

In Figur 2 ist ein Längsschnitt durch eine erfindungsgemäß ausgeführte, innengekühlte Strömungsmaschinenschaufel 110 (kurz: Schaufel) dargestellt, wie sie beispielsweise in der Turbine 103 der Gasturbogruppe 100 Verwendung findet. Die in Figur 2 dargestellte Strömungsmaschinenschaufel 110 ist als Schaufel eines Stators einer Turbine, hier des ersten Stators der Turbine 103, ausgeführt. Gleichermaßen kann die Erfindung aber auch auf eine Rotorschaufel angewendet werden.

Die in Figur 2 dargestellte Strömungsmaschinenschaufel 110 umfasst einen Schaufelfuß 111 mit einer Kühlmittelzuführung 112, einen Schaufelkopf 113, der mit einem Deckbandelement 114 ausgebildet ist, sowie ein Schaufelblatt 115, welches sich zwischen dem Schaufelfuß 111 und dem Schaufelkopf 113 in einer Schaufellängsrichtung erstreckt und eine Schaufelblatt-Vorderkante 116 sowie eine Schaufelblatt-Hinterkante 117 aufweist.

In einer Anordnung der Schaufel 110 in einer Strömungsmaschine wird die in Figur 2 dargestellte Schaufel von einer Hauptströmung der Strömungsmaschine gemäß dem Pfeil 118 von rechts nach links durchströmt. Der die Hauptströmung führende Strömungskanal der Strömungsmaschine wird gehäuseseitig durch den Schaufelfuß 111 und nabenseitig durch das Deckbandelement 114 begrenzt.

Wie in dem in Figur 2 dargestellten Längsschnitt zu erkennen ist, sind in dem Schaufelblatt zwei Durchströmkanäle, nämlich ein erster Durchströmkanal 119a sowie ein zweiter Durchströmkanal 119b, angeordnet, die sich jeweils in Schaufellängsrichtung zwischen dem Schaufelfuß 111 und dem Schaufelkopf 113 erstrecken. Weiterhin ist in dem Deckbandelement 114 ein Deckbandkühlkanal 120 mit einer Einlassöffnung 121 und einer Auslassöffnung 122 ausgebildet.

Erster Durchströmkanal 119a, Deckbandkühlkanal 120 und zweiter Durchströmkanal 119b definieren einen Strömungspfad durch die Schaufel, durch den zum Zweck der Kühlung ein Kühlfluid durch die Schaufel strömen kann. Hierfür ist der erste Durchströmkanal 119a an seinem schaufelfußseitigen Ende mit der Kühlmittelzuführung 112 und an seinem schaufelkopfseitigen Ende über die Einlassöffnung 121 mit dem Deckbandkühlkanal 120 verbunden. Der zweite Durchströmkanal 119b ist an seinem schaufelkopfseitigen Ende über die Auslassöffnung 122 mit dem Deckbandkühlkanal 120 und an seinem schaufelfußseitigen Ende mit einer Kühlmittelabführung verbunden. Die Kühlmittelabführung ist in Figur 2 nicht dargestellt. In der in Figur 2 dargestellten Schaufel besteht keine unmittelbare Verbindung zwischen dem ersten Durchströmkanal 119a und dem zweiten Durchströmkanal 119b. Während der zweite Durchströmkanal 119b in der hier dargestellten Ausführungsform der Erfindung unmittelbar an die Schaufelblatt-Vorderkante 116 angrenzt, ist der erste Durchströmkanal 119a im hinteren Bereich des Schaufelblatts, d.h. weiter entfernt zu der SchaufelVorderkante 116 als der zweite Durchströmkanal 119b, angeordnet.

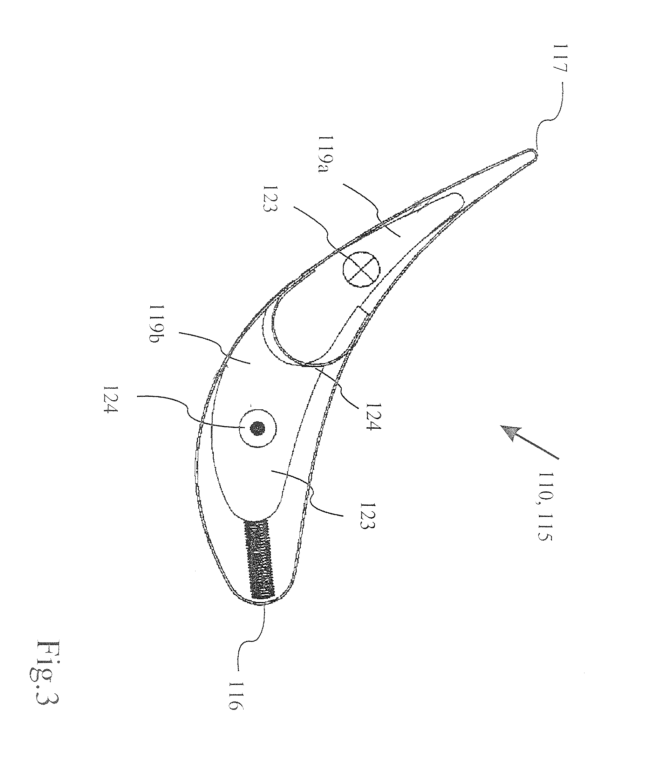

Figur 3 zeigt einen Schnitt quer zur Längsrichtung des Schaufelblatts 115 der in Figur 2 dargestellten Strömungsmaschinenschaufel 110, aus dem die Anordnung und Erstreckung der Durchströmkanäle 119a, 119b in dem Schaufelblatt 115 ersichtlich ist. Die Schnittführung entspricht in etwa der strichpunktierten Linie X-X in Figur 2 mit einer der Pfeilrichtung entsprechenden Blickrichtung. In der Ansicht nicht dargestellt ist die Draufsicht auf das Deckbandelement 114. In Figur 3 dargestellt sind aber die Positionen der Einlassöffnung 121 und der Auslassöffnung 122 des Deckbandkühlkanals 120.
Wie Figur 3 zu entnehmen ist, ist das Schaufelblatt 115 mit einem Hohlraum 123 ausgeführt und durch ein als Trennwandung ausgebildetes Lenkblech 124 in zwei Bereiche unterteilt. Die Innenkontur des Hohlraums ist im Wesentlichen geometrisch ähnlich der Außenkontur des Schaufelblatts der Strömungsmaschinenschaufel ausgeführt. Der erste, an die Schaufelblatt-Vorderkante 116 angrenzende Bereich bildet den zweiten Durchströmkanal 119b, wohingegen der zweite, zur Schaufelblatt-Vorderkante 116 entfernte Bereich den ersten Durchströmkanal 119a bildet. Im Bereich des Lenkblechs wird der erste Durchströmkanal 119a ferner teilweise von dem zweiten Durchströmkanal 119b umschlossen. Die Einlassöffnung 121 und die Auslassöffnung 122 sind jeweils als kreisrunde Öffnungen ausgeführt.

Frisches Kühlfluid, üblicherweise Luft, die im Verdichterbereich abgezweigt wird, wird über die Kühlmittelzuführung 112 dem ersten Durchströmkanal 119a zugeführt und längs des ersten Durchströmkanals 119a durch das Schaufelblatt 115 geführt. Da der erste Durchströmkanal 119a in dem zur Schaufelblatt-Vorderkanten 116 entfernten, in Strömungsrichtung der Hauptströmung hinteren Bereich des Schaufelblatts 115 angeordnet ist, in dem nur ein vergleichsweise geringer Wärmeeintrag von der Hauptströmung in das Schaufelblatt erfolgt, wird die Kühlluft beim Durchströmen des ersten Durchströmkanals 119a nur geringfügig erwärmt. Die Kühlluft gelangt demzufolge nahezu unverbraucht über die Einlassöffnung 121 in den Deckbandkühlkanal 120, von wo aus sie sich gleichmäßig über den gesamten Deckbandkühlkanal 120 verteilt. Dadurch, dass die Kühlluft nur geringfügig erwärmt bzw. noch weitgehend unverbraucht ist, und somit ein hinreichendes Temperaturgefälle zwischen der Materialtemperatur des Deckbandelements 114 und der Kühlluft vorliegt, ist eine gute Kühlung des Deckbandelements sichergestellt.

Der Deckbandkühlkanal 120 der in Figur 2 dargestellten Schaufel 110 ist gegenüber der Umgebung abgedichtet, d.h. der Deckbandkühlkanal 120 weist neben den Öffnungen, die mit den Durchströmkanälen 199a und 119b verbunden sind, somit hier der Einlassöffnung 123 und der Auslassöffnung 124, keine weiteren Öffnungen auf. Insbesondere sind in dem Deckbandelement 114 keine Öffnungen angeordnet, durch die das in dem Deckbandkühlkanal 120 befindliche Kühlfluid in die Umgebung der Schaufel 110 oder unmittelbar in die Hauptströmung entweichen kann.

Der gesamte, über den ersten Durchströmkanal 119a zugeführte Kühlfluidmassenstrom wird demzufolge nach dem Durchströmen des Deckbandkühlkanals 120 wieder vollständig über die Auslassöffnung 122 in den zweiten Durchströmkanal 119b abgegeben.

Der zweite Durchströmkanal 119b grenzt unmittelbar an die Schaufelblatt-Vorderkante 116 an. Da die heiße Hauptströmung der Turbine an der Schaufelblatt-Vorderkante 116 eine Staupunktströmung ausbildet, findet in diesem Bereich der Schaufel ein hoher Wärmeeintrag von der Hauptströmung in das Schaufelblatt 115 statt. Dies führt zu einer hohen Temperatur der Schaufel im Bereich der Schaufelblatt-Vorderkante 116, wodurch es wiederum zu einem großen Wärmeeintrag in das den zweiten Durchströmkanal 119b durchströmende Kühlfluid kommt. Das Kühlfluid wird hierdurch sehr stark erwärmt bzw. für den Zweck der Kühlung verbraucht.

Nach dem Durchströmen des zweiten Durchströmkanals 119b wird das verbrauchte Kühlfluid über die Kühlmittelabführung abgeführt.
Die Kühlmittelabführung ist in den Figuren 2 und 3 nicht dargestellt. Das schaufelfußseitige Ende des zweiten Durchströmkanals 119b ist hierfür mit einem Kühlmittelabführkanal verbunden. In einer zweckmäßigen Ausgestaltung erstreckt sich der Kühlmittelabführkanal entlang der Schaufelblatt-Hinterkante 117. An der Schaufelblatt-Hinterkante sind des Weiteren vorzugsweise eine Vielzahl von Austrittsöffnungen angeordnet, die den Kühlmittelabführkanal mit der Außenseite der Schaufel verbinden. Die Austrittsöffnungen sind bevorzugt über die Schaufelblattlänge näherungsweise gleichmäßig verteilt angeordnet.
Das für Kühlzwecke weitgehend verbrauchte Kühlfluid wird somit über den in Figur 2 nicht dargestellten Kühlmittelabführkanal in den Bereich der Schaufelblatt-Hinterkante geführt und verteilt sich von hier etwa gleichmäßig auf die an der Hinterkante angeordneten Austrittsöffnungen. Über die Austrittsöffnungen gelangt das Kühlfluid auf die Außenseite des Schaufelblatts und in die Hauptströmung. Durch eine geeignete, dem Fachmann geläufige Ausgestaltung der Austrittsöffnungen wird erreicht, dass das aus den Austrittsöffnungen ausströmende Kühlfluid an der Schaufelblatt-Hinterkante 117 einen Kühlfilm ausbildet, durch den die dünne Hinterkante der Schaufel von der heißen Hauptströmung getrennt wird.

Alternativ hierzu kann ein Kühlmittelabführkanal aber auch so ausgebildet sein, dass das Kühlfluid in den Schaufelfuß zurückgeführt und von hier über ein Kanalsystem zu einer anderen Abströmstelle geführt wird.

Es hat sich gezeigt, dass durch die erfindungsgemäße Ausführung der Schaufel 110 eine zuverlässige Kühlung aller Elemente der Strömungsmaschinenschaufel gewährleistet ist. Da das Kühlfluid in einem weitgehend unverbrauchten Zustand zunächst dem Deckbandkühlkanal 120 zugeführt wird und erst danach in den zweiten Durchströmkanal 119b gelangt, ist eine zuverlässige Kühlung insbesondere auch des Deckbandelements 114 sichergestellt. Dies gilt vor allem auch dann, wenn der Wärmeeintrag von der Hauptströmung in das Schaufelblatt 115 sehr hoch ist.

Ferner hat es sich gezeigt, dass die erfindungsgemäß ausgeführte Schaufel 110 dazu beiträgt, die Strömungsverluste der Hauptströmung zu vermindern. Diese Verminderung der Strömungsverluste ist darin begründet, dass bei der erfindungsgemäß ausgeführten Schaufel kein Kühlfluid im Bereich des Deckbandelements 114 aus dem Deckbandkühlkanal 120 in die Hauptströmung gelangt. Das zur Kühlung des Deckbandelements 114 verwendete Kühlfluid wird stattdessen vorteilhaft dort der Hauptströmung zugeführt und mit dieser vermischt, wo die Hauptströmung sehr energiereich ist. Beispielsweise wird durch eine über die Höhe des Schaufelblatts verteilte Zuführung des verbrauchten Kühlfluids in der Hauptströmung nur geringe Strömungsverluste verursacht.

Weiterhin wird durch die erfindungsgemäß ausgeführte Schaufel die Effizienz des eingesetzten Kühlfluids gesteigert. Somit ist zur Erzielung derselben Kühlleistung ein geringerer Kühlfluidmassenstrom erforderlich. Diese höhere Kühleffektivität ist darin begründet, dass das zur Kühlung des Deckbandelements 114 verwendete Kühlfluid auch zur Kühlung des Schaufelblatts 110 genutzt wird.

Der in Figur 2 dargestellte Deckbandkühlkanal 120 ist in dem Deckbandelement 114 im Wesentlichen parallel zu der Innenfläche 114ᵢ des Deckbandelements 114 schlitzförmig ausgebildet und erstreckt sich über das gesamte Deckbandelement 114.

Ferner ist der in Figur 2 dargestellte Deckbandkühlkanal 122 in der zur Zeichenebene der Figur 2 lotrechten Richtung in dem Deckbandelement 114 beidseitig offen ausgeführt. Die lotrechte Richtung zur Zeichenebene der Figur 2 entspricht einer Umfangsrichtung der Anordnung der Schaufel in einer Strömungsmaschine. Durch Aneinanderreihung einer Vielzahl in dieser Weise ausgeführter Strömungsmaschinenschaufeln am Umfang der Strömungsmaschine ergibt sich so ein am Umfang durchgängiges Deckband mit einem am Umfang durchgängigen Deckbandkühlkanal. Hierdurch ist eine am Umfang durchgängige und gleichmäßige Kühlung des Deckbands möglich.

Weiterhin ist Figur 2 ein geeignetes Herstellungsverfahren zur Herstellung einer erfindungsgemäß ausgebildeten Strömungsmaschinenschaufel mit Deckbandelement und Deckbandkühlkanal 122 zu entnehmen. Der in Figur 2 dargestellte Schaufelkopf 113 umfasst hierzu eine erste Decklage 125, die das Schaufelblatt 115 abdeckt. Ferner ist im Bereich der Schaufelblatt-Vorderkante 116 sowie im Bereich der Schaufelblatt-Hinterkante 117 jeweils ein Abschlusssteg 126a und 126b angeordnet, der sich jeweils lotrecht zur ersten Decklage 125 von dieser aus erstreckt.

Zwischen den Abschlussstegen 126a und 126b ist in einem Abstand zu der ersten Decklage 125 eine weitere Decklage 127 so angeordnet, dass der Zwischenraum zwischen der ersten Decklage 125 und der weiteren Decklage 127 den Deckbandkühlkanal 120 ausbildet. Die Einlassöffnung 123 und die Auslassöffnung 124 sind in der ersten Decklage 125 angeordnet.

Während Schaufelfuß 111, das innen hohl ausgeführte Schaufelblatt 115, die erste Decklage 125 sowie die Abschlussstege 126a und 126b als einteiliges Gussstück hergestellt sind, ist die weitere, zweite Decklage 127 erst nach Fertigstellung des Gussstücks zwischen den Abschlussstegen eingesetzt und über eine Nut-Verbindung 128a und 128b fixiert.

Ebenso ist auch die als Lenkblech 124 ausgeführte Trennwandung über den Schaufelfuß 111 in den Hohlraum 123 des Schaufelblatts 115 eingesetzt. Da das dünne, federnd ausgeführte Lenkblech 124 in einer Richtung quer zur Schaufellängsrichtung gebogen in den Hohlraum eingesetzt ist, führt die Biege-Rückstellkraft dazu, dass sich das Lenkblech 124 eigenständig an die Innenseite des Hohlraums 123 anlegt und den ersten Durchströmkanal 11a gegen den zweiten Durchströmkanal 119b abdichtet.

Die in Figur 2 dargestellte Strömungsmaschinenschaufel 110 stellt nur eine beispielhafte Ausführungsform der Erfindung dar, die in vielfältiger Weise von einem Fachmann ohne Weiteres modifiziert werden kann. Beispielsweise können die Austrittsöffnungen an der Schaufel-Hinterkante entfallen und es kann die Kühlmittelabführung über einen im Schaufelfuß angeordneten Kühlmittelabführkanal erfolgen.

### Bezugszeichenliste

- 100: Gasturbogruppe
- 101: Verdichter
- 102: Brennkammer
- 103: Turbine
- 104: Leistungsverbraucher
- 110: Strömungsmaschinenschaufel
- 111: Schaufelfuß
- 112: Kühlmittelzuführung
- 113: Schaufelkopf
- 114: Deckbandelement
- 114ᵢ: Innenfläche des Deckbandelements
- 115: Schaufelblatt
- 116: Schaufelblatt-Vorderkante
- 117: Schaufelblatt-Hinterkante
- 118: Richtung der Hauptströmung
- 119a: erster Durchströmkanal
- 119b: zweiter Durchströmkanal
- 120: Deckbandkühlkanal
- 121: Einlassöffnung
- 122: Auslassöffnung
- 123: Hohlraum
- 124: Lenkblech
- 125: erste Decklage
- 126a, 126b: Abschlussstege
- 127: zweite Decklage

## Patentansprüche

1. Strömungsmaschinenschaufel (110), insbesondere Turbinenschaufel einer Gasturbine oder Gasturbogruppe, umfassend einen Schaufelfuß (111) mit einer Kühlmittelzuführung (112), einen Schaufelkopf (113), der mit einem Deckbandelement (114) ausgebildet ist,
sowie ein Schaufelblatt (115), welches sich zwischen dem Schaufelfuß (111) und dem Schaufelkopf (113) in einer Schaufellängsrichtung erstreckt und eine Schaufelblatt-Vorderkante (116) sowie eine Schaufelblatt-Hinterkante (117) aufweist,
wobei innerhalb des Schaufelblattes ein erster Durchströmkanal (119a) und ein zweiter Durchströmkanal (119b) angeordnet sind, die sich jeweils in Schaufellängsrichtung erstrecken, und wenigstens längs eines Abschnitts des Deckbandelements in dem Deckbandelement (114) ein Deckbandkühlkanal (120) mit einer Einlassöffnung (121) und einer Auslassöffnung (122) ausgebildet ist,
wobei der erste Durchströmkanal (119a) an seinem schaufelfußseitigen Ende mit der Kühlmittelzuführung (112) und an seinem schaufelkopfseitigen Ende über die Einlassöffnung (121) mit dem Deckbandkühlkanal (120) verbunden ist,
**dadurch gekennzeichnet, dass** der zweite Durchströmkanal (119b) an seinem schaufelkopfseitigen Ende über die Auslassöffnung (122) mit dem Deckbandkühlkanal (120) verbunden ist,
wobei der zweite Durchströmkanal (119b) näher zu der Schaufelblatt-Vorderkante (116) angeordnet ist als der erste Durchströmkanal (119a).

2. Strömungsmaschinenschaufel gemäss Anspruch 1, **dadurch gekennzeichnet, dass** in dem Schaufelblatt wenigstens eine Austrittsöffnung angeordnet ist, über die der zweite Durchströmkanal (119b) mit der Außenseite der Schaufel verbunden ist.

3. Strömungsmaschinenschaufel gemäss einem der vorhergehenden Ansprüche, **dadurch gekennzeichnet, dass** der zweite Durchströmkanal (119b) an seinem schaufelfußseitigen Ende mit einer Kühlmittelabführung verbunden ist.

4. Strömungsmaschinenschaufel gemäss einem der vorhergehenden Ansprüche,
**dadurch gekennzeichnet, dass** der zweite Durchströmkanal (119b) in einem an die Schaufelblatt-Vorderkante (116) angrenzenden Bereich der Strömungsmaschinenschaufel angeordnet ist und/oder der erste Durchströmkanal (119a) in einem an die Schaufelblatt-Hinterkante (117) angrenzenden Bereich der Strömungsmaschinenschaufel angeordnet ist.

5. Strömungsmaschinenschaufel gemäss einem der vorhergehenden Ansprüche, **dadurch gekennzeichnet, dass** der erste Durchströmkanal (119a) zumindest teilweise von dem zweiten Durchströmkanal (119b) umschlossen ist.

6. Strömungsmaschinenschaufel gemäss einem der vorhergehenden Ansprüche, **dadurch gekennzeichnet, dass** der erste Durchströmkanal (119a) vollständig von dem zweiten Durchströmkanal (119b) umschlossen ist.

7. Strömungsmaschinenschaufel gemäss einem der vorhergehenden Ansprüche, **dadurch gekennzeichnet, dass** die Strömungsmaschinenschaufel (110) eine Schaufel eines Stators der Strömungsmaschine ist.

8. Strömungsmaschinenschaufel gemäss einem der vorhergehenden Ansprüche, **dadurch gekennzeichnet, dass** der Deckbandkühlkanal (120) gegenüber der Umgebung abgedichtet ist.

9. Strömungsmaschinenschaufel gemäss einem der vorhergehenden Ansprüche, **dadurch gekennzeichnet, dass** der erste Durchströmkanal (119a) ausschließlich über den Deckbandkühlkanal (120) mit dem zweiten Durchströmkanal (119b) verbunden ist.

10. Strömungsmaschinenschaufel gemäss einem der vorhergehenden Ansprüche, **dadurch gekennzeichnet, dass** der Deckbandkühlkanal (120) in dem Deckbandelement (114) im wesentlichen parallel zu einer Innenfläche des Deckbandelements (114ᵢ) mit einer Erstreckung von etwa der Schaufelblatt-Vorderkante (116) bis zu etwa der Schaufelblatt-Hinterkante (117) ausgebildet ist.

11. Strömungsmaschinenschaufel gemäss einem der vorhergehenden Ansprüche, **dadurch gekennzeichnet, dass** der Deckbandkühlkanal (120) in dem Deckbandelement (114) in einer Umfangsrichtung der Anordnung der Strömungsmaschinenschaufel in der Strömungsmaschine beidseitig offen ist.

12. Strömungsmaschinenschaufel gemäss einem der vorhergehenden Ansprüche, **dadurch gekennzeichnet, dass** zwischen dem zweiten Durchströmkanal (119b) und der Kühlmittelabführung wenigstens ein weiterer Durchströmkanal so angeordnet ist, dass der zweite Durchströmkanal zusammen mit dem wenigstens einen weiteren Durchströmkanal einen serpentinenartigen Kanalverlauf in dem Schaufelblatt ausbilden.

13. Strömungsmaschinenschaufel gemäss einem der vorhergehenden Ansprüche, **dadurch gekennzeichnet, dass** die Kühlmittelabführung wenigstens eine im Bereich der Schaufelblatt-Hinterkante (117) angeordnete Austrittsöffnung umfasst.

14. Strömungsmaschinenschaufel gemäss Anspruch 13, **dadurch gekennzeichnet, dass** die Kühlmittelabführung eine Vielzahl von Austrittsöffnungen umfasst, die im Bereich der Schaufelblatt-Hinterkante (117) gleichmäßig verteilt über das Schaufelblatt (115) angeordnet sind.

15. Strömungsmaschinenschaufel gemäss einem der vorhergehenden Ansprüche, **dadurch gekennzeichnet, dass** das Schaufelblatt (115) einen Hohlraum (123) umschließt, der sich in Schaufellängsrichtung durch wenigstens einen Teil des Schaufelblatts (115) erstreckt, und in dem Hohlraum eine Trennwandung (124) angeordnet ist, die den Hohlraum (123) in einen der Schaufelblatt-Vorderkante (116) zugewandten Bereich sowie einen der Schaufelblatt-Vorderkante (116) abgewandten Bereich unterteilt,
wobei der der Schaufelblatt-Vorderkante zugewandte Bereich den zweiten Durchströmkanal (119b) bildet und der der Schaufelblatt-Vorderkante abgewandte Bereich den ersten Durchströmkanal (119a) bildet.

16. Strömungsmaschinenschaufel gemäss Anspruch 15, **dadurch gekennzeichnet, dass** sich der Hohlraum (123) in Schaufellängsrichtung durch das gesamte Schaufelblatt (115) erstreckt.

17. Strömungsmaschinenschaufel gemäss einem der Ansprüche 15 oder 16, **dadurch gekennzeichnet, dass** eine Innenkontur des Hohlraums (123) im wesentlichen geometrisch ähnlich der Außenkontur des Schaufelblatts (115) ist.

18. Strömungsmaschinenschaufel gemäss einem der Ansprüche 15 bis 17, **dadurch gekennzeichnet, dass** die Trennwandung ein Lenkblech (124) ist.

19. Strömungsmaschinenschaufel gemäss einem der vorhergehenden Ansprüche, **dadurch gekennzeichnet, dass** der Schaufelkopf (113) eine erste Decklage (125) umfasst, die das Schaufelblatt (115) abdeckt, und dass im Bereich der Schaufelblatt-Vorderkante (116) sowie im Bereich der Schaufelblatt-Hinterkante (117) je ein Abschlusssteg (126a und 126b), der sich jeweils lotrecht zur ersten Decklage (125) von dieser aus erstreckt, angeordnet ist, und dass zwischen den Abschlussstegen (126a, 126b) in einem Abstand zu der ersten Decklage (125) eine weitere Decklage (127) so angeordnet und mittels der Abschlussstege (126a, 126b) gehaltert ist, dass ein Zwischenraum zwischen der ersten Decklage (125) und der weiteren Decklage (127) den Deckbandkühlkanal (120) ausbildet, wobei die Einlassöffnung (121) und die Auslassöffnung (122) in der ersten Decklage (125) angeordnet sind.

20. Strömungsmaschinenschaufel gemäss einem der vorhergehenden Ansprüche, **dadurch gekennzeichnet, dass** der Schaufelfuß (111), das mit einem Hohlraum (123) ausgeführte Schaufelblatt (115), die erste Decklage (125) des Schaufelkopfes (113) und die Abschlussstege (126a, 126b) als einteiliges Gussstück hergestellt sind.

21. Turbinenstator mit einer Vielzahl von am Umfang nebeneinander angeordneten Strömungsmaschinenschaufeln, wobei wenigstens eine Strömungsmaschinenschaufel (110) gemäss einem der vorhergehenden Ansprüche ausgeführt ist.

22. Gasturbogruppe mit wenigstens einer Strömungsmaschinenschaufel (110) gemäss einem der vorhergehenden Ansprüche 1 bis 20.

23. Verfahren zur Kühlung einer Strömungsmaschinenschaufel mitsamt einem Deckbandelement, insbesondere zur Kühlung einer Turbinenschaufel einer Gasturbine oder Gasturbogruppe, umfassend, einen Kühlmittelmassenstrom in einem der Schaufelblatt-Vorderkante entfernten Bereich über das Schaufelblatt der Schaufel dem Deckbandelement zuzuführen, den Kühlmittelmassenstrom längs des zu kühlenden Deckbandelements zu führen und den Kühlmittelmassenstrom anschließend in einem der Schaufelblatt-Vorderkante nahen Bereich über das Schaufelblatt der Schaufel zu führen.

24. Verfahren gemäss Anspruch 23, umfassend, den Kühlmittelmassenstrom nach dem Führen längs des Deckbandelements zur Kühlung der Strömungsmaschinenschaufel entlang eines serpentinenartigen Durchströmwegs durch das Schaufelblatt zu leiten.

25. Verfahren gemäss einem der Ansprüche 23 oder 24, umfassend, wenigstens einen Teil des Kühlmittelmassenstroms nach dem Führen längs des Deckbandelements unmittelbar entlang der Schaufelblatt-Vorderkante zu führen.

26. Verfahren gemäss einem der Ansprüche 23 bis 25, wobei das Schaufelblatt einen Hohlraum umfasst, der sich in Schaufellängsrichtung durch wenigstens einen Teil des Schaufelblatts erstreckt, und der Hohlraum in wenigstens zwei Bereich unterteilt ist, wobei ein erster Bereich angrenzend an die Schaufelblatt-Vorderkante angeordnet ist und ein zweiter Bereich nahe der Schaufelblatt-Hinterkante angeordnet ist, **dadurch gekennzeichnet, dass** der Kühlmittelmassenstrom über den zweiten Bereich dem Deckbandelement zugeführt wird und über den ersten Bereich abgeführt wird.

27. Verfahren gemäss einem der Ansprüche 23 bis 26, umfassend, den Kühlmittelmassenstrom über eine über die Schaufelhöhe verteilte Abströmung an einer Schaufelhinterkante in eine Hauptströmung abzuführen.

28. Anwendung des Verfahrens gemäss einem der Ansprüche 23 bis 27 zur Kühlung einer Strömungsmaschinenschaufel, insbesondere einer Statorschaufel einer Gasturbogruppe.

29. Herstellungsverfahren zur Herstellung einer Strömungsmaschinenschaufel gemäss einem der Ansprüche 1 bis 20, umfassend, den Schaufelfuß, das innen mit einem Hohlraum ausgeführte Schaufelblatt, die erste Decklage des Schaufelkopfes und die Abschlussstege als einteiliges Gussstück herzustellen, die Trennwandung in den Hohlraum des Gussstücks einzusetzen, und die zweite Decklage zwischen den Abschlussstegen einzusetzen.
